# EUROPEAN PATENT SPECIFICATION

(11) **EP 1 162 441 B1**
(45) Date of publication and mention of the grant of the patent: **07.12.2005**
(21) Application number: 01304937.4
(22) Date of filing: 06.06.2001
(51) Int. Cl.: G01K 13/08, F16C 17/24, F01M 1/18

(54) **Apparatus for and method of monitoring temperature in connection with a combustion engine**
Verfahren und Vorrichtung zur Überwachung der Temperatur einer Brennkraftmaschine
Dispositif et méthode pour le contrôle de la température d'un moteur à combustion interne

(30) Priority: 07.06.2000 FI 20001359
(43) Date of publication of application: 12.12.2001
(73) Proprietor: Wärtsilä Finland Oy, 65380 Vaasa (FI)
(72) Inventor: Knipström, Leif, 66530 Kvevlax (FI); Nurmi, Hannu, 65380 Vaasa (FI); Liljenfeldt, Gösta, 65450 Solf (FI); Halla-Aho, Pasi, 65200 Vaasa (FI)
(74) Representative: Hanson, William Bennett

(56) References cited:
- WO-A-00/33042
- DE-A- 2 136 809
- DE-A- 19 731 671
- DE-U- 29 801 910
- GB-A- 1 047 190
- GB-A- 1 182 152
- GB-A- 2 201 537
- PATENT ABSTRACTS OF JAPAN vol. 010, no. 291 (M-522), 3 October 1986 (1986-10-03) & JP 61 105306 A (ISHIKAWAJIMA HARIMA HEAVY IND CO LTD;OTHERS: 01), 23 May 1986 (1986-05-23)
- PATENT ABSTRACTS OF JAPAN vol. 009, no. 245 (M-418), 2 October 1985 (1985-10-02) & JP 60 098214 A (ISHIKAWAJIMA HARIMA JUKOGYO KK), 1 June 1985 (1985-06-01)

## Description

This invention relates to an arrangement for monitoring temperature in connection with a piston engine, which comprises a crankshaft including a crank web unit for each cylinder of the engine, which crank web unit comprises crank webs being transverse in relation to the crankshaft and a crank pin connecting the crank webs, as well as a connecting rod connected to the crank pin of the crank web unit, in which arrangement at least one crank web unit is provided with a bearing temperature detecting assembly, which includes a temperature detecting means provided in the crank pin according to the preamble of claim 1.

A hydrodynamic bearing is commonly used as a big end bearing, the bearing between the crankshaft and connecting rod of an engine. On seizing of this kind of bearing, a local metal against metal contact takes place between the bearing and bearing pin. Thus, the temperature rises in both the bearing and the bearing pin. Under steady state conditions, the temperature of a hydrodynamic bearing is substantially steady.

Undisturbed operation of an engine is especially important particularly in ship engines or engines used for power production. In order to improve reliability in large piston engines, the temperature of the main bearings is normally monitored continuously for detection of seizing at as early a stage as possible, whereby greater damage may be avoided. When a failure in a bearing is detected at an early stage, it is often enough to simply replace the bearing with a new one. Without temperature monitoring there is a high risk that seizing will develop for so long that the result will even be damage of the crankshaft, which also needs to be repaired or replaced.

Temperature monitoring of big end bearing is currently rarely performed in practice, even if it is known as such. Both measuring the temperature and transferring the measurement information from a rotating bearing is however, difficult to carry out.

In Finnish publication FI 72186 there is shown a method and apparatus for monitoring the temperature of a movable bearing. A heat-releasing device is provided in connection with a big end bearing, which device triggers as the temperature exceeds a proof level. In the vicinity of the trajectory of the bearing, there is an observation means, which observes the action of the releasing device and/or an effect caused by the releasing and transmits a signal representing the releasing to a control centre. A problem in this kind of an arrangement is e.g. the fact that transmitting the signal forward is problematic.

In German publication DE 19614803 there is shown a mechanically operating solution, in which by effect of temperature a melting piece triggers a spring assembly, which moves by means of a spring to a position, in which a conductor affecting the engine's operation breaks. This solution does not exactly determine temperature, but acts as a sort of mechanical safety device, which stops the engine. This kind of arrangement is also very sensitive to groundless stops of the engine. A corresponding solution launched by exceeding a certain temperature limit has been shown also in publication US 2963691.

A certain crank pin measurement system has been shown in publication DE 478418, in which each crank pin is provided with a through drilling, in which a temperature detector is fixed. Additionally there is a space provided in the crankshaft, though which the wiring of each detector is arranged to lead. From each detector a wire leads to the other end of the crankshaft, where a sliding ring arrangement is located. By means of the sliding ring arrangement the measurement signal is transferred forward from the rotating crankshaft. Clear shortcomings of this solution include the transferring of measurement information by long wiring and the sliding ring, which makes the solution very vulnerable to disturbances. Additionally the position of temperature detector at the sliding surface of the bearing deteriorates the quality of the sliding surface, which significantly shortens the service life of the bearing and thus also shortens the maintenance cycle of the engine.

It is an object of the invention to provide an arrangement for monitoring bearing temperature in connection with a piston engine, which minimises prior art problems. Specifically it is an object of the invention to provide an arrangement for monitoring temperature in connection with a big end bearing of a piston engine, in which the temperature monitoring results in reliable measurement information and which operates reliably and without disturbances, without impairing the reliability of the engine.

The present invention provides a temperature monitoring arrangement for a crankshaft of a piston engine, according to claim 1. Preferred or optional features of the invention are defined in the other claims. The invention is for a crankshaft including a crank web unit for each cylinder of the engine, which crank web unit comprises crank webs being transverse in relation to the crankshaft and a crank pin connecting the crank webs, as well as a connecting rod connected to a crank pin of the crank web unit. In the arrangement at least one crank web unit is provided with a bearing temperature detecting assembly, which includes a temperature detecting means provided in the crank pin. In the arrangement, the temperature detecting means is arranged at a distance of 1-20 mm from the surface of the crank pin. The bearing temperature detecting assembly comprises an arrangement for transferring the measurement information by telemetry or a corresponding method from the rotating crankshaft to a stationary measurement information receiver, and the arrangement for transferring the measurement information is arranged in or on the crank web.

The temperature detecting means is preferably arranged in a region in a sectional plane normal to the longitudinal axis of the crank pin, which region is in a half of the crank pin on the side of the rotational axis of the crankshaft, i.e. on the inside.

In this way, reliable measurement information concerning the condition of the bearing is obtained. The position of the temperature detecting means is also advantageous, specifically in large piston engines, since its response is still at an adequate level and simultaneously the bearing surface will remain intact.

The measurement information receiver may be installed to be stationary in the engine. The temperature detecting means is preferably provided in the vicinity of the bearing surface of the crank pin, in the longitudinal direction at the bearing location.

Most preferably the temperature detecting means has been arranged in a region in a sectional plane normal to the longitudinal axis of the crank pin, which region is bordered by a sector defined by lines beginning from the centre of the crank pin and being positioned at ±45° in respect of an axis line between the rotational axis of the crankshaft and the centre of the crank pin. The measurement information receiver arranged in a stationary part of the engine is arranged in the vicinity of the trajectory of the crank web.

A bore or the like may be arranged in the crank web for the temperature detecting assembly, which bore extends from a surface of the crank web at a location below the sliding surface of the bearing, and in which bore or the like said temperature detecting assembly is arranged so that the temperature detecting means is located at the sliding surface end of the bore or the like and the arrangement for transferring the measurement information is located at the crank web surface end of the bore or the like.

The present invention also provides a method of monitoring temperature in connection with a piston engine, according to claim 6.

Several advantages are obtained with the invention. In the arrangement according to the invention the measurement of temperature is performed at the very location at which raised temperature may be first observed. Additionally the arrangement according to the invention is fast operating, and by making use of it, one can immediately see if something abnormal is taking place. The arrangement according to the invention is also advantageous from a maintenance point of view, for the measurement arrangement must be removed only very rarely in connection with maintenance work. By means of the invention, it is also possible to achieve maximal service life of the bearings, whereas the maintenance cycle of the engine will not be overly shortened by wear of the bearing. Specifically in ship engines and large engines used for power production this is of great importance. Additionally the arrangement is not damage-prone in connection with maintenance work.

The invention will now be described by way of example only with reference to the accompanying drawings, in which:
- Figure 1 schematically shows an arrangement according to the invention,
- Figure 2 shows a section II-II on Figure 1, and
- Figure 3 schematically shows a location of the temperature measurement in the arrangement according to the invention.

In the drawings the reference 1 designates a crankshaft of a large diesel engine, which comprises a crank web unit 2 for each cylinder of the engine, which crank web unit 2 comprises crank webs 2' being transverse in relation to the crankshaft and a crank pin 2" connecting the crank webs, as well as a connecting rod 10 connected to a crank pin 2" of the crank web unit 2. According to the invention, a temperature detecting assembly 3 has been arranged in the crank web unit 2 in connection with the crankshaft, by means of which temperature is continuously measured. The temperature detecting assembly 3 comprises a temperature detecting means 7, such as a temperature detector and an arrangement 8 for transferring the measurement information from the moving crankshaft to a measurement information receiver 9 being stationary in the engine.

The temperature detector 7 may be accommodated in the immediate vicinity of the surface of the crank pin 2". Advantageously the temperature detecting means 7 is arranged in a region in a sectional plane normal to the longitudinal axis of the crank pin 2", which region is in a half of the crank pin 2" on the side of the rotational axis of the crankshaft, i.e. on the inside. More specifically the temperature detecting means 7 has been arranged in a region in a sectional plane normal to the longitudinal axis of the crank pin 2", which region is bordered by a sector defined by lines beginning from the centre of the crank pin 2" and being positioned at ±45° in respect of an axis line between the rotational axis 5 of the crankshaft and the centre 6 of the crank pin 2". It has been discovered that inertia forces affecting the connecting rod have the effect of bringing about contact or at least the thinnest lubrication oil film between the crank pin and the bearing mainly in a region in a sectional plane normal to the longitudinal axis of the crank pin 2", which region is in a half of the crank pin 2"on the side of the rotational axis 5 of the crankshaft. Although in certain cases there may be exceptions, one may say that for at least 75 % of the operating time of the engine the greatest load is in the half of the crank pin on the side of rotational axis of the crankshaft. Because of this, it is advantageous to monitor the temperature of the crank pin 2" specifically in a four stroke engine at this region of the crank pin, whereas possible seizing of the bearing may by indicated directly by measuring the temperature of the crank pin in a half on the side of a journal of the main bearing 4 of the crankshaft. According to the invention, the rise in temperature may be detected at a very early stage, because the temperature detector has been positioned in the very region at which the temperature begins to rise first. In this way, the problem can be detected even before the temperature has risen in the whole bearing or bearing surface.

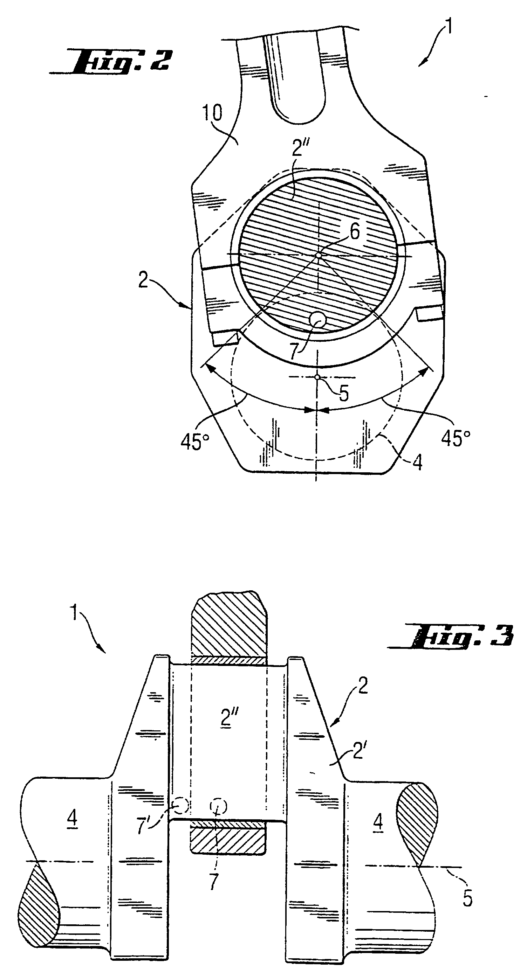

The temperature detector may be located, as shown in figure 3, either in the middle region of the crank pin, which is illustrated by detector 7, or at the side of the crank pin, which is illustrated by detector 7'. In this case the detector 7' senses heat conducted by the crank pin.

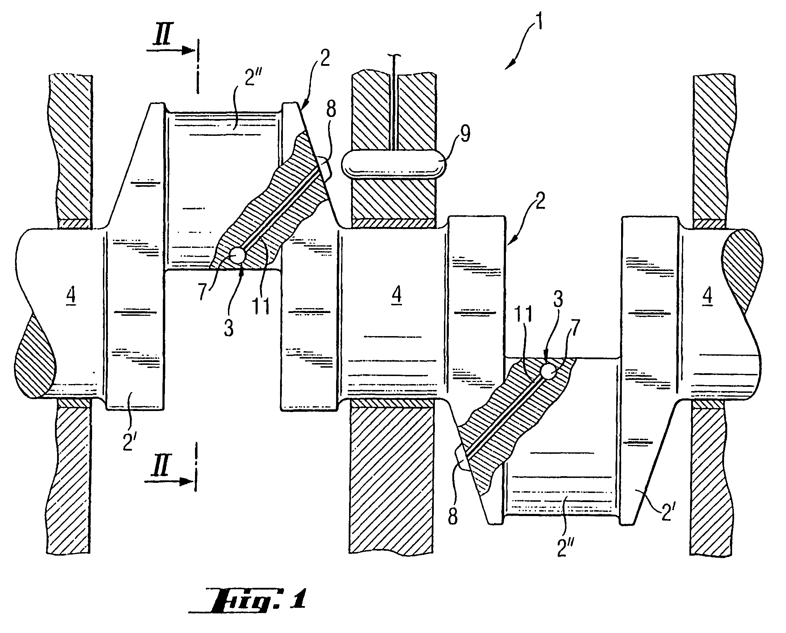

As may be seen from figure 1, the temperature detecting assembly 3 comprises a temperature detecting means 7 and an arrangement 8 for transferring the measurement information forward from the rotating crankshaft. For this purpose, a measurement information receiver 9 has been arranged in a stationary part of the engine. Temperature detecting means 7 has been provided in the vicinity of the bearing surface of the crank pin 2" and the detecting means is in communication with the arrangement 8 for transferring the measurement information provided in crank web 2'. A measurement information receiver 9 is arranged in the vicinity of the trajectory of the crank web 2', in the stationary part of the engine. In this manner, the measurement information may be transferred forward from the rotating crank web unit. The transfer of the measurement information is performed for example by way of telemetry or a corresponding method.

The arrangement comprises additionally a control unit (not shown), which is connected at least to the measurement information receiver 9. The control unit continuously receives, in addition to other required input information, information as to the temperature of the crank pins of the crankshaft, and the control unit compares this measurement information with a stored set value. If the measured temperature exceeds the set value, an alarm is triggered to the operating control system and the engine is turned off.

The invention has been described above in connection with a large diesel engine, but it is clear that the invention may also be applied in connection with other types of piston engines. Thus, it is clear that the technical solution described above is only exemplary. The invention is not limited to the embodiments shown but several modifications of the invention are reasonable within the scope of the appended claims.

## Claims

1. A temperature monitoring arrangement for a crankshaft of a piston engine, the crankshaft (1) including a crank web unit (2) for each cylinder of the engine, which crank web unit (2) comprises crank webs (2') being transverse in relation to the crankshaft and a crank pin (2") connecting the crank webs, as well as a connecting rod (10) connected to a crank pin (2") of the crank web unit (2), in which arrangement at least one crank web unit (2) is provided with a bearing temperature detecting assembly (3), which includes a temperature detecting means (7) provided in the crank pin (2"), **characterised in that** the temperature detecting means (7) is arranged at a distance of 1-20 mm from the surface of the crank pin, and that the bearing temperature detecting assembly (3) comprises an arrangement (8) for transferring the measurement information by telemetry or a corresponding method from the rotating crankshaft to a stationary measurement information receiver (9), and that the arrangement (8) for transferring the measurement information is arranged in or on the crank web (2').

2. An arrangement according to claim 1, **characterised in that** temperature detecting means (7) is arranged in a region in a sectional plane normal to the longitudinal axis of the crank pin (2"), which region is in a half of the crank pin (2") on the side of the rotational axis (5) of the crankshaft.

3. An arrangement according to claim 1 or 2, **characterised in that** the temperature detecting means (7) is arranged to a region in a sectional plane normal to the longitudinal axis of the crank pin (2"), which region is bordered by a sector defined by lines beginning from the centre (6) of the crank pin (2") and being positioned at ±45° in respect of an axis line between the rotational axis (5) of the crankshaft and the centre (6) of the crank pin (2").

4. An arrangement according to claim 1, 2 or 3, **characterised in that** the measurement information receiver (9) is arranged in or on a stationary part of the engine.

5. An arrangement according to claim 2, **characterised in that** a bore or the like (11) is arranged in the crank web (2') for the temperature detecting assembly (3), which bore extends from a surface of the crank web (2') at a location below the sliding surface of the bearing, and in which bore or the like (11) said temperature detecting assembly (3) is arranged so that the temperature detecting means (7) is located at the sliding surface end of the bore or the like (11) and the arrangement (8) for transferring the measurement information is located at the crank web surface end of the bore or the like (11).

6. A method of monitoring temperature in connection with a piston engine, which comprises a crankshaft (1) including a crank web unit (2) for each cylinder of the engine, which crank web unit (2) comprises crank webs (2') being transverse in relation to the crankshaft and a crank pin (2") connecting the crank webs, as well as a connecting rod (10) connected to a crank pin (2") of the crank web unit (2), in which method the temperature of at least one crank web unit (2) is continuously measured with a bearing temperature detecting assembly (3), which includes a temperature detecting means (7) provided in the crank pin (2"), **characterised in that** the heat from the bearing is initially conducted by the material of the crank pin (2") over a distance of 1-20 mm from the surface of the crank pin to the bearing temperature detecting assembly (3), and that an arrangement (8) for transferring the measurement information transfers the measurement information from the bearing temperature detecting assembly (3) by telemetry or a corresponding method from the rotating crankshaft to a stationary measurement information receiver (9).

## Patentansprüche

1. Temperaturüberwachungsanordnung für eine Kurbelwelle eines Hubkolbenmotors, wobei die Kurbelwelle (1) eine Kurbelwangeneinheit (2) für jeden Zylinder des Motors enthält, wobei die Kurbelwangeneinheit (2) sich quer zur Kurbelwelle erstreckende Kurbelwangen (2') und einen die Kurbelwangen verbindenden Kurbelzapfen (2 ") sowie eine mit einem Kurbelzapfen (2 ") der Kurbelwangeneinheit (2) verbundene Verbindungsstange (10) umfasst, wobei bei der Anordnung mindestens eine Kurbelwangeneinheit (2) mit einer Lagertemperaturerfassungsanordnung (3) versehen ist, die ein im Kurbelzapfen (2") vorgesehenes Temperaturerfassungsmittel (7) enthält, **dadurch gekennzeichnet, dass** das Temperaturerfassungsmittel (7) in einem Abstand von 1 - 20 mm von der Fläche des Kurbelzapfens angeordnet ist und dass die Lagertemperaturerfassungsanordnung (3) eine Anordnung (8) zur Übertragung der Messdaten durch Telemetrie oder ein entsprechendes Verfahren von der sich drehenden Kurbelwelle zu einem stationären Messdatenempfänger (9) umfasst und dass die Anordnung (8) zur Übertragung der Messdaten in oder an der Kurbelwange (2') angeordnet ist.

2. Anordnung nach Anspruch 1, **dadurch gekennzeichnet, dass** das Temperaturerfassungsmittel (7) in einem Bereich in einer senkrecht zur Längsachse des Kurbelzapfens (2") verlaufenden Schnittebene angeordnet ist, wobei sich der Bereich in einer Hälfte des Kurbelzapfens (2") auf der Seite der Drehachse (5) der Kurbelwelle befindet.

3. Anordnung nach Anspruch 1 oder 2, **dadurch gekennzeichnet, dass** das Temperaturerfassungsmittel (7) in einem Bereich in einer senkrecht zur Längsachse des Kurbelzapfens (2") verlaufenden zweiten Schnittebene angeordnet ist, wobei der Bereich durch einen Sektor begrenzt wird, der durch von der Mitte (6) des Kurbelzapfens (2") beginnenden und in einem Winkel von ± 45° zur Achslinie zwischen der Drehachse (5) der Kurbelwelle und der Mitte (6) des Kurbelzapfens (2") verlaufenden Linien definiert wird.

4. Anordnung nach Anspruch 1, 2 oder 3, **dadurch gekennzeichnet, dass** der Messdatenempfänger (9) in oder an einem stationären Teil des Motors angeordnet ist.

5. Anordnung nach Anspruch 2, **dadurch gekennzeichnet, dass** eine Bohrung oder dergleichen (11) in der Kurbelwange (2') für die Temperaturerfassungsanordnung (3) ausgebildet ist, wobei sich die Bohrung von einer Fläche der Kurbelwange (2') an einer Stelle unterhalb der Gleitfläche des Lagers aus erstreckt, und wobei in der Bohrung oder dergleichen (11) die Temperaturerfassungsanordnung (3) so angeordnet ist, dass das Temperaturerfassungsmittel (7) sich am Gleitflächenende der Bohrung oder dergleichen (11) und die Anordnung (8) zur Übertragung der Messdaten sich an der Kurbelwangenendfläche der Bohrung oder dergleichen (11) befindet.

6. Verfahren zur Temperaturüberwachung in Verbindung mit einem Hubkolbenmotor, der eine Kurbelwelle (1) mit einer Kurbelwangeneinheit (2) für jeden Zylinder des Motors enthält, wobei die Kurbelwangeneinheit (2) sich quer zur Kurbelwelle erstreckende Kurbelwangen (2') und einen die Kurbelwangen verbindenden Kurbelzapfen (2") sowie eine mit einem Kurbelzapfen (2'') der Kurbelwangeneinheit (2) verbundene Verbindungsstange (10) umfasst, wobei bei dem Verfahren die Temperatur mindestens einer Kurbelwangeneinheit (2) mit einer Lagertemperaturerfassungsanordnung (3) kontinuierlich gemessen wird, die ein im Kurbelzapfen (2 ") vorgesehenes Temperaturerfassungsmittel (7) enthält, **dadurch gekennzeichnet, dass** die Wärme von dem Lager anfangs durch das Material des Kurbelzapfens (2") über eine Strecke von 1- 20 mm von der Fläche des Kurbelzapfens zur Lagertemperaturerfassungsanordnung (3) geleitet wird, und dass eine Anordnung (8) zur Übertragung der Messdaten die Messdaten von der Lagertemperaturerfassungsanordnung (3) durch Telemetrie oder ein entsprechendes verfahren von der sich drehenden Kurbelwelle zu einem stationären Messdatenempfänger (9) überträgt.

## Revendications

1. Agencement de contrôle de la température d'un vilebrequin d'un moteur à piston, le vilebrequin (1) comportant une unité de flasques de vilebrequin (2) pour chaque cylindre du moteur, laquelle unité de flasques de vilebrequin (2) comprend des flasques de vilebrequin (2') transversaux par rapport au vilebrequin et un maneton de vilebrequin (2") reliant les flasques de vilebrequin, ainsi qu'une bielle (10) connectée à un maneton de vilebrequin (2") de l'unité de flasques de vilebrequin (2), dans lequel agencement au moins une unité de flasques de vilebrequin (2) est pourvue d'un ensemble de détection de la température des paliers (3), qui comporte un moyen de détection de la température (7) prévu dans le maneton de vilebrequin (2"), **caractérisé en ce que** le moyen de détection de la température (7) est arrangé à une distance de 1-20 mm de la surface du maneton de vilebrequin, et **en ce que** l'ensemble de détection de la température des paliers (3) comprend un agencement (8) pour transférer les informations de mesure par télémétrie ou par un procédé correspondant du vilebrequin en rotation à un récepteur stationnaire d'informations de mesure (9), et **en ce que** l'agencement (8) pour transférer les informations de mesure est arrangé dans ou sur le flasque de vilebrequin (2').

2. Agencement selon la revendication 1, **caractérisé en ce que** le moyen de détection de la température (7) est arrangé dans une région dans un plan en coupe normal par rapport à l'axe longitudinal du maneton de vilebrequin (2"), laquelle région est dans une moitié du maneton de vilebrequin (2") du côté de l'axe de rotation (5) du vilebrequin.

3. Agencement selon la revendication 1 ou 2, **caractérisé en ce que** le moyen de détection de la température (7) est arrangé dans une région dans un plan en coupe par rapport normal à l'axe longitudinal du maneton de vilebrequin (2"), laquelle région est bordée par un secteur défini par des lignes commençant depuis le centre (6) du maneton de vilebrequin (2") et étant positionnées à ± 45° par rapport à une ligne axiale entre l'axe de rotation (5) du vilebrequin et le centre (6) du maneton de vilebrequin (2").

4. Agencement selon la revendication 1, 2 ou 3, **caractérisé en ce que** le récepteur d'informations de mesure (9) est arrangé dans ou sur une partie stationnaire du moteur.

5. Agencement selon la revendication 2, **caractérisé en ce qu'**un alésage ou similaire (11) est arrangé dans le flasque de vilebrequin (2') pour l'ensemble de détection de la température (3), lequel alésage s'étend d'une surface du flasque de vilebrequin (2') en un emplacement en dessous de la surface de glissement du palier, et dans lequel alésage ou similaire (11) ledit ensemble de détection de la température (3) est arrangé de sorte que le moyen de détection de la température (7) soit situé au niveau de l'extrémité de la surface de glissement de l'alésage ou similaire (11) et que l'agencement (8) pour transférer les informations de mesure soit situé au niveau de l'extrémité de la surface du flasque de vilebrequin de l'alésage ou similaire (11).

6. Procédé de contrôle de la température en association avec un moteur à piston, lequel comprend un vilebrequin (1) comportant une unité de flasques de vilebrequin (2) pour chaque cylindre du moteur, laquelle unité de flasques de vilebrequin (2) comprend des flasques de vilebrequin (2') transversaux par rapport au vilebrequin et un maneton de vilebrequin (2") reliant les flasques de vilebrequin, ainsi qu'une bielle (10) connectée à un maneton de vilebrequin (2") de l'unité de flasques de vilebrequin (2), dans lequel procédé la température d'au moins une unité de flasques de vilebrequin (2) est mesurée en continu avec un ensemble de détection de la température des paliers (3), qui comporte un moyen de détection de la température (7) prévu dans le maneton de vilebrequin (2"), **caractérisé en ce que** la chaleur provenant des paliers est d'abord conduite par le matériau du maneton de vilebrequin (2") sur une distance de 1-20 mm depuis la surface du maneton de vilebrequin jusqu'à l'ensemble de détection de la température des paliers (3), et **en ce qu'**un agencement (8) pour transférer les informations de mesure transfère les informations de mesure provenant de l'ensemble de détection de la température des paliers (3) par télémétrie ou par un procédé correspondant du vilebrequin en rotation à un récepteur stationnaire d'informations de mesure (9).
